(19) Europäisches Patentamt
European Patent Office
Office européen des brevets

(11) **EP 2 477 403 B1**

(12) **EUROPEAN PATENT SPECIFICATION**

(45) Date of publication and mention
of the grant of the patent:
**03.07.2019  Bulletin 2019/27**

(51) Int Cl.:
*H04N 19/147* *(2014.01)*   *H04N 19/46* *(2014.01)*
*H04N 19/61* *(2014.01)*   *H04N 19/593* *(2014.01)*
*H04N 19/117* *(2014.01)*   *H04N 19/182* *(2014.01)*
*H04N 19/82* *(2014.01)*

(21) Application number: **12151278.4**

(22) Date of filing: **16.01.2012**

(54) **Filter adaptation with directional features for video/image coding**

Filteranpassung mit Richtungsmerkmalen zur Video- bzw. Bildcodierung

Adaptation de filtre doté de fonctionnalités directionnelles pour le codage de vidéos/images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.01.2011   US 201161432951 P
04.03.2011   US 201161449490 P
08.03.2011   US 201161450404 P
13.09.2011   US 201161534267 P
10.01.2012   US 201213347589**

(43) Date of publication of application:
**18.07.2012   Bulletin 2012/29**

(73) Proprietor: **Samsung Electronics Co., Ltd.
Suwon-si, Gyeonggi-do, 443-742 (KR)**

(72) Inventors:
• **Lai, Wang Lin
Gyeonggi-do (KR)**
• **Fernandes, Felix Carlos
Gyeonggi-do (KR)**

(74) Representative: **Nederlandsch Octrooibureau
P.O. Box 29720
2502 LS The Hague (NL)**

(56) References cited:
WO-A1-00/48117       WO-A1-97/40630
WO-A1-2008/075247   WO-A1-2009/126299
WO-A1-2011/112237   US-A1- 2008 152 017
US-A1- 2010 158 103   US-A1- 2011 249 725

• **TAKASHI WATANABE ET AL: "In-loop filter using block-based filter control for video coding", IMAGE PROCESSING (ICIP), 2009 16TH IEEE INTERNATIONAL CONFERENCE ON, IEEE, PISCATAWAY, NJ, USA, 7 November 2009 (2009-11-07), pages 1013-1016, XP031628483, ISBN: 978-1-4244-5653-6**
• **KARCZEWICZ (QUALCOMM) M ET AL: "Video coding technology proposal by Qualcomm", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. XP030007566, 18 May 2010 (2010-05-18), XP030007567, ISSN: 0000-0049**
• **Y-W HUANG ET AL: "Adaptive Quadtree-based Multi-reference Loop Filter", 37. VCEG MEETING; 15-4-2009 - 18-4-2009; YOKOHAMA, JP; (VIDEO CODINGEXPERTS GROUP OF ITU-T SG.16),, no. VCEG-AK24, 16 April 2009 (2009-04-16), XP030003676, ISSN: 0000-0085**
• **CHUJOH T ET AL: "Improvement of Block-based Adaptive Loop Filter", 36. VCEG MEETING; 8-10-2008 - 10-10-2008; SAN DIEGO, US; (VIDEO CODINGEXPERTS GROUP OF ITU-T SG.16),, no. VCEG-AJ13, 10 October 2008 (2008-10-10), XP030003635, ISSN: 0000-0086**
• **BJONTEGAARD G ET AL: "Adaptive deblocking filter", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 614-619, XP011099254, ISSN: 1051-8215, DOI: 10.1109/TCSVT.2003.815175**

- **YU LIU: "Unified Loop Filter for Video Compression", IEEE TRANSACTIONS ON CIRCUITS AND SYSTEMS FOR VIDEO TECHNOLOGY, IEEE SERVICE CENTER, PISCATAWAY, NJ, US, vol. 20, no. 10, 1 October 2010 (2010-10-01), pages 1378-1382, XP011318747, ISSN: 1051-8215**
- **LAI P ET AL: "Loop filter with directional similarity mapping (DSM)", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-D221, 15 January 2011 (2011-01-15), XP030008261, ISSN: 0000-0013**

**Description**

**TECHNICAL FIELD OF THE INVENTION**

The present application relates generally to video image processing and, more specifically, to a system and method for video image encoding and decoding.

**BACKGROUND OF THE INVENTION**

Hybrid video coding schemes, namely block-based motion compensation followed by transforms and quantization, results in coding artifacts due to its lossy nature. To further improve coding efficiency and the quality of encoded video, adaptive loop filtering (ALF) methods have been proposed, which design filters on a frame by frame basis to minimize the mean-squared error (MMSE filters). Frames after applying ALF will have improved visual quality, and serve as better references for temporal predictive coding to achieve higher coding efficiency. The estimated filter coefficients are encoded and transmitted as side information in the bitstream. Thus, the rate-distortion tradeoff in designing ALF schemes is between the size (rate) of side information and the quality improvement.

Various ALF approaches have been proposed to tackle different type of artifacts. For video content exhibiting localized focus changes, P. Lai, Y. Su, P. Yin, C. Gomila, and A. Ortega, "Adaptive filtering for video coding with focus change," in Proc. IEEE International Conference on Acoustics, Speech, and Signal Processing (ICASSP) 2007, Honolulu, HI, USA, pp. 1.661-664, Apr. 2007; designed multiple filters by classifying macroblocks (MB) based on the type of estimated local MB-wise focus changes. Then for each class of blocks, a Wiener filter is designed to compensate for the associated type of focus change. In inter-view disparity compensation for multiview video coding (MVC), since focus mismatch is depth-dependent and depth is the reciprocal of disparity, P. Lai, Y. Su, P. Yin, C. Gomila, and A. Ortega, "Adaptive filtering for cross-view prediction in multi-view video coding," in Proc. SPIE Visual Communications and Image Processing(VCIP) 2007, San Jose, CA, USA, Jan. 2007; classified blocks in a video frame according to the block-wise disparity vectors. Again each class adapts to a MMSE Wiener filter. For more generic denoising purposes, T. Chujoh, A. Tanizawa, and T. Yamakage, "Block-based adaptive loop filter," ITU-SG16 Q6 VCEG-AJ13, San Diego, CA, USA, Oct. 2008; T. Chujoh, N. Wada, T. Watanabe, G. Yasuda, and T. Yamakage, "Specification and experimental results of quadtree-based adaptive loop filter", ITU-SG16 Q6 VCEG-AK22, Apr. 200; T. Watanabe, N. Wada, G. Yasuda, A. Tanizawa, T. Chujoh, and T. Yamakage, "In-loop filter using block-based filter control for video coding," in Proc. IEEE International Conference on Image Processing (ICIP) 2009, Cairo, Egypt, pp.1013-1016, Nov. 200; all designed a single Wiener filter per frame, while enabling spatial adaptation with filtering on/off control on equal-sized block basis as used in "Block-based adaptive loop filter" and "In-loop filter using block-based filter control for video coding", or on hierarchical quadtree basis as used in "Specification and experimental results of quadtree-based adaptive loop filter". M. Karczewicz, P. Chen, R. Joshi, X. Wang, W.-J. Chien, and R. Panchal, "Video coding technology proposal by Qualcomm Inc." JCTVC-A121, Dresden, Germany, Apr. 2010; further extended the single filter with quadtree-on/off control as in "Specification and experimental results of quadtree-based adaptive loop filter" to multiple filters with quadtree-on/off control, by classifying individual pixels (instead of classifying blocks) in a frame into 16 classes according to the magnitudes of sums of local Laplacian. To achieve the best coding efficiency, initially, a Wiener filter is designed for each pixel class. Then rate-distortions tests are conducted to possibly reduce the number of filters by merging different filter class-labels and redesign filters for the merged classes. Clearly, this procedure presents additional complexity in designing filters. Improved coding efficiency, as compared to single filter with quadtree-on/off control, has been reported. We will denote the adaptive filter design in "Video coding technology proposal by Qualcomm Inc." it as QC_ALF. However, besides the aforementioned additional complexity associated with filter class-label merging and filter redesign, another drawback of QC ALF is that since its classification only considers the magnitude of local Laplacian, the resulting linear Wiener filters tend to be low-pass and isotropic in general, and hence are not suitable for reducing artifacts around sharp edges.

To improve both coding efficiency and visual quality of video coding, this disclosure present an adaptive loop filtering design, which exploits local directional characteristics exhibit in the video content. Multiple simple directional features are computed and compared to classify blocks in a video. Each class of blocks adapt to a directional filter, with symmetric constraints imposed on the filter coefficients according to the dominant orientation determined by the classification. The design optionally combines linear spatial filtering and directional filtering with a similarity mapping function. To emphasis pixel similarity for explicit adaptation to edges, a simple hard-threshold mapping function can optionally be used to avoid artifacts arising from across-edge filtering.

WO 2008 / 075 247 relates to methods and apparatuses for image compression and decompression and discloses a post-processing filtering operation using filtering coefficients dependent on clusters of pixel data. A cluster assignment may depend on gradients, texture, etc. WO 2008 / 075247 does not disclose block-based classification or temporal prediction of filter coefficients.

US 2010 / 158 103 describes filtering techniques for filtering of video blocks of a video unit. The filtering techniques may select one or more different types of filtering for each video block of the video unit based on various factors such as whether the video block is inter-coded or intra-coded.

WO 2009 / 126 299 discloses a de-blocking filter configured for use with non-local intra prediction modes so as to de-block filter at least a portion of the picture data encoded using the non-local intra prediction.

WO 97 / 40 630 discloses classifications of groups of pixel areas based on the structure of discontinuities in the areas. An area encoder is selected based on the classification. US 2008 / 152 017 discloses a method for removing ringing noise pixels based on a classification of a pixel area.

Yu Liu, in "Unified loop filter for video compression" (IEEE Trans. on Circuits and Systems for Video technology, vol 20, no 10, October 2010) proposes a unified loop filter for video coding. The proposed filter includes a non-linear enhancement filter and a linear restoration filter, and uses the classical optimization framework of least mean square error.

WO 2011 / 112 237 is an international application which was filed before but published after the priority date of the present application, and is relevant for novelty only. It discloses a classification-based loop filter for use in an encoder. Pixels are classified and a Wiener filter is computed. The filter coefficients are encoded with the video.

## SUMMARY OF THE INVENTION

A method includes designing multiple filters corresponding to a predetermined number of classes by classifying blocks in a video frame into a predetermined number of classes based on at least one local directional feature of each block, wherein each block comprises a plurality of pixels. The method further includes encoding filter coefficients of the multiple filters by computing, encoding, and transmitting filter coefficient differences between the filter coefficients and filter coefficients used during encoding of a previously encoded video frame. The method further includes applying the multiple filters having the encoded filter coefficients to respective blocks corresponding to each of the classes.

The invention further involves a corresponding decoding method as well as corresponding apparatuses.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 provides a high-level block diagram of a video encoder with ALF;
FIGURE 2 provides a high-level block diagram of a video decoder with ALF;
FIGURE 3 illustrates flowchart of directional ALF at encoder, according to embodiments of the present disclosure;
FIGURE 4 illustrates flowchart of directional ALF at decoder, according to embodiments of the present disclosure;
FIGURE 5 illustrates directional classifications according to embodiments of the present disclosure;
FIGURE 6 illustrates pixels locations for computing directional features according to embodiments of the present disclosure;
FIGURES 7 through 10 illustrate filter coefficients for directional classes according to embodiments of the present disclosure; and
FIGURE 11 illustrates a Scanning order for coefficient differences according to embodiments of the present disclosure.

## DETAILED DESCRIPTION OF THE INVENTION

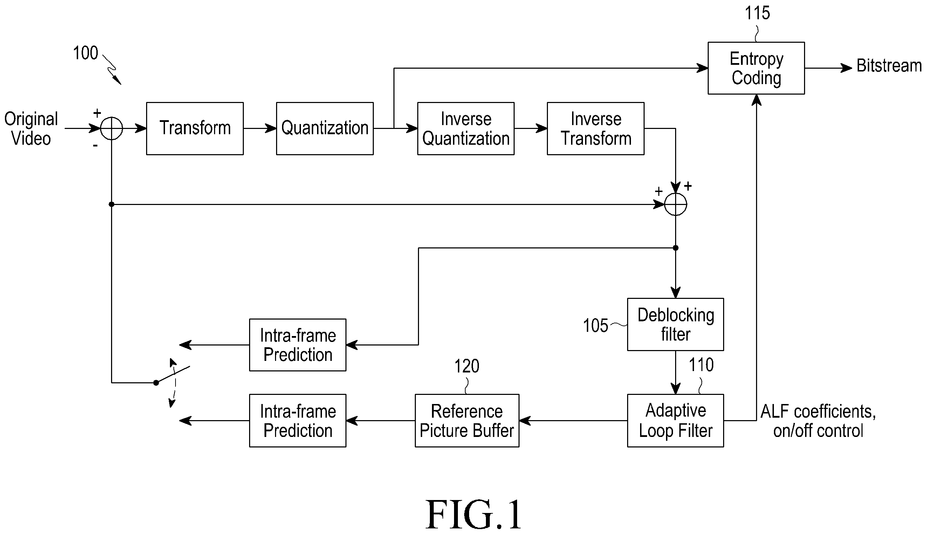

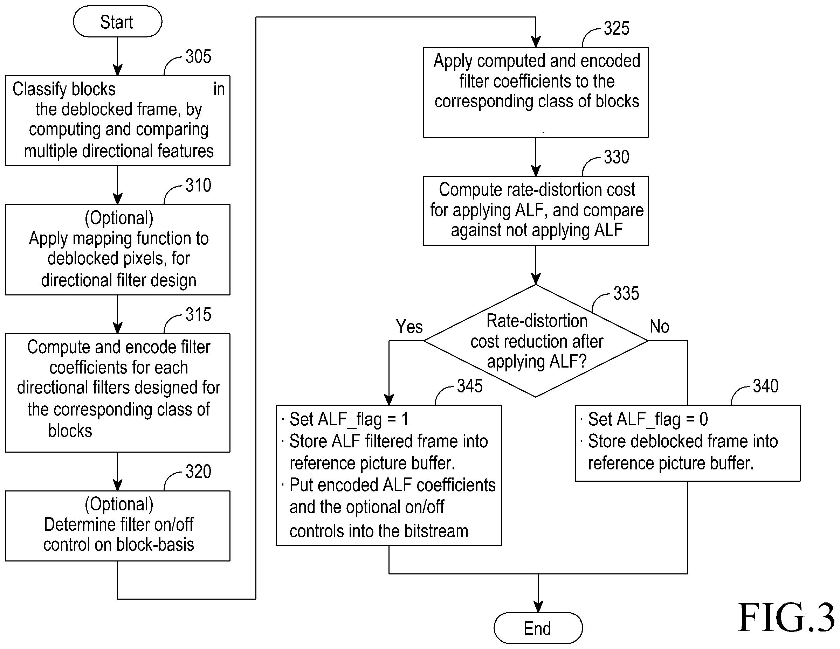

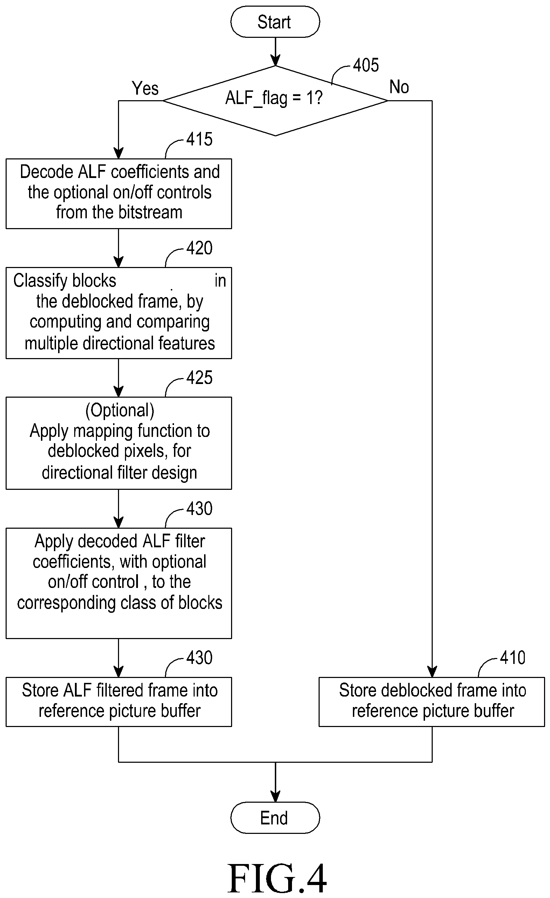

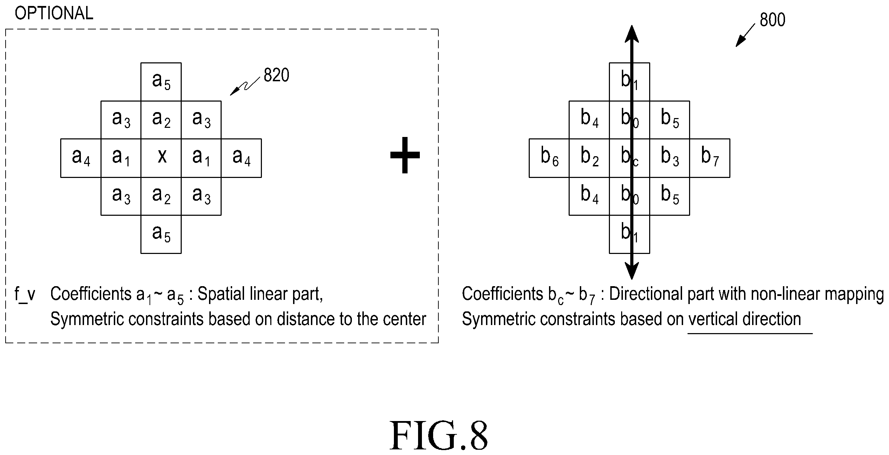

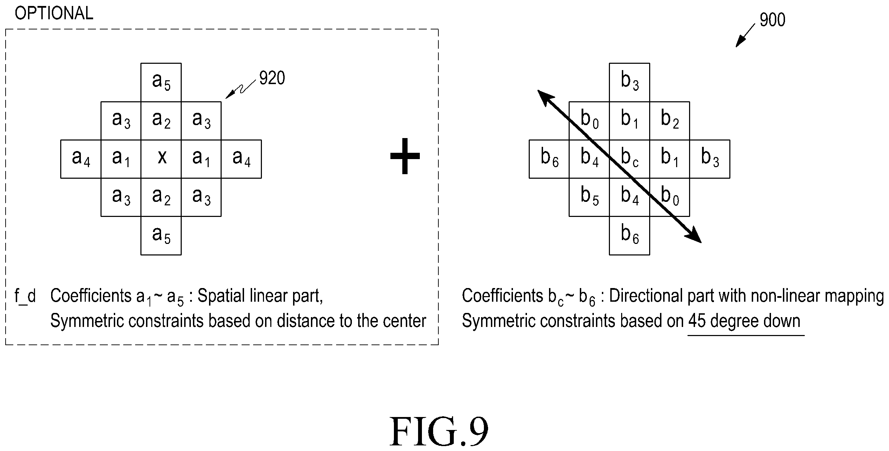

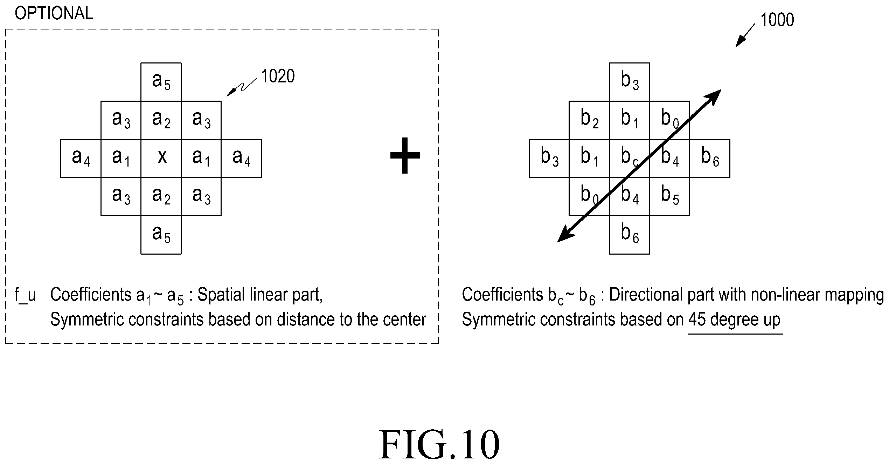

FIGURES 1 through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged image processing system.

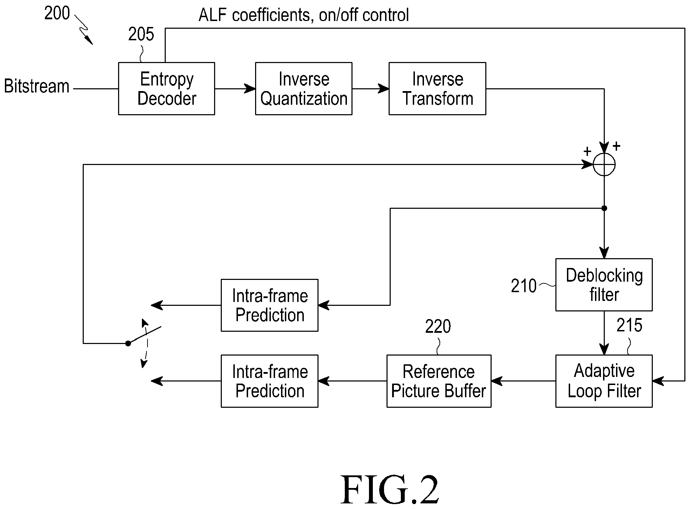

FIGURE 1 illustrates an encoder with ALF according to embodiments of the present disclosure. FIGURE 2 illustrates a decoder with ALF according to embodiments of the present disclosure. The embodiment of the encoder 100 shown in FIGURE 1 and the video decoder 200 shown in FIGURE 2 are for illustration only. Other embodiments could be used without departing from the scope of this disclosure.

The encoder 100 includes a de-blocking filter 105 and an Adaptive Loop Filter (ALF) 110. The ALF 110 designs and apply ALF after the de-blocking filter 105 and is configured to receive an output from the de-blocking filter 105 and provide an outputted signal to an entropy coding block 115 and a reference picture buffer 120. The filtered references are stored in the reference picture buffer 120. Filter coefficients and a control map need to be encoded into the bitstream.

Embodiments of the present disclosure provide a modified adaptive loop filter 110 that includes a Loop filter designed with directional features. There are two main ALF functionality provided in this disclosure: 1. Classifying blocks in a video frame by computing and comparing at least one directional features, for filter adaptation; and 2. Constructing directional filters wherein symmetric constraints are imposed on the filter coefficients according to the directional classification.

The video decoder 200 includes an entropy decoder 205, which decode the ALF filter coefficients and on/off control map; and a de-blocking filter 210 and an Adaptive Loop Filter (ALF) 215, which construct filter(s) according to the decoded filter coefficients, received as the output from the entropy decoder 205, and apply the filter(s) after the de-blocking filter 210. The ALF 215 provides an outputted signal to a reference picture buffer 220. The filtered references are stored in the reference picture buffer 220. Embodiments of the present disclosure provide a modified adaptive loop filter 215 that includes a Loop filter designed with directional features.

Similar to the ALF 110 in the encoder 100, embodiments of the present disclosure provide the ALF 215 in the video decoder with two main ALF functionality: 1. Classifying blocks in a video frame by computing and comparing at least one directional features, for filter adaptation; and 2. Constructing directional filters wherein symmetric constraints are imposed on the filter coefficients according to the directional classification.

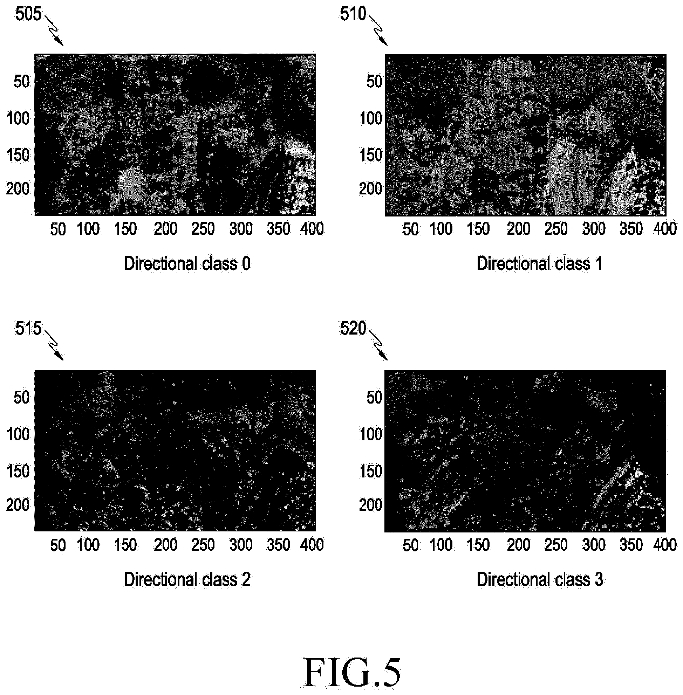

First, the classification by computing and comparing at least one directional features is explained. FIGURE 5 illustrates directional classifications according to embodiments of the present disclosure. The embodiments of the directional classifications shown in FIGURE 5 are for illustration only and other embodiments could be used without departing from the scope of this disclosure.

In certain embodiments, pixel classification is based on directional features, such as local gradients. That is, the reconstructed pixels in a video frame are classified into four classes based on the direction of local gradients.

For each pixel X(i,j), the four directional local gradients are computed as follows:

$$\text{grad\_h}(i,j) = \sum_{k=-L}^{L} \sum_{l=-L}^{L} \left| 2X(i+k,j+l) - X(i+k,j+l+1) - X(i+k,j+l-1) \right|$$

[Eqn. 1]

$$\text{grad\_v}(i,j) = \sum_{k=-L}^{L} \sum_{l=-L}^{L} \left| 2X(i+k,j+l) - X(i+k+1,j+l) - X(i+k-1,j+l) \right|$$

[Eqn. 2]

$$\text{grad\_d}(i,j) = \sum_{k=-L}^{L} \sum_{l=-L}^{L} \left| 2X(i+k,j+l) - X(i+k+1,j+l+1) - X(i+k-1,j+l-1) \right|$$

[Eqn. 3]

$$\text{grad\_u}(i,j) = \sum_{k=-L}^{L} \sum_{l=-L}^{L} \left| 2X(i+k,j+l) - X(i+k-1,j+l+1) - X(i+k+1,j+l-1) \right|$$

[Eqn. 4]

Therefore, within the neighborhood of ±L pixels, grad h measures the horizontal gradient, grad v measures the vertical gradient, grad d measures the gradient of 45 degrees (°) down, and grad_u measures the gradient of 45° up. Then, the pixel X(i,j) will be assigned as directional class D(i,j) according to the direction with minimum local gradient: min_g(i,j)=min{grad_h(i,j), grad_v (i,j), grad_d(i,j), grad_u (i,j)}:

$$D(i, j) = 0 \text{ if } \min\_g(i, j) = grad\_h(i, j) \qquad \text{[Eqn. 5]}$$

$$D(i, j) = 1 \text{ if } \min\_g(i, j) = grad\_v(i, j) \qquad \text{[Eqn. 6]}$$

$$D(i, j) = 2 \text{ if } \min\_g(i, j) = grad\_d(i, j) \qquad \text{[Eqn. 7]}$$

$$D(i, j) = 3 \text{ if } \min\_g(i, j) = grad\_u(i, j) \qquad \text{[Eqn. 8]}$$

Using Equations 5 through 8, the ALF 110 classifies pixels into classes with similar edge and feature directions in step 305. The ALF 110 classifies blocks in the deblocked frame by computing and comparing multiple directional features. In certain embodiments, the ALF 110 applies, in block 310, a mapping function to deblocked pixels for a directional filter design. In block 315, the ALF 110 computes and encodes filter coefficients for each directional filter designed for the corresponding class of blocks. In certain embodiments, the ALF 110 determines filter on/off control on a block-basis in block 320. In block 325, the ALF 110 applies the computed and encoded filter coefficients to the corresponding class of blocks. Thereafter, in block 330, the ALF 110 computes rate-distortion cost for applying adaptive loop filtering and compares, in block 335, the computed rate-distortion cost against not applying adaptive loop filtering. If there is no rate-distortion cost reduction after applying ALF, the ALF 110 sets a flag to zero (0) and stores the deblocked frame into reference picture buffer in block 340. If there is a rate-distortion cost reduction after applying ALF, the ALF 110 sets a flag to one (1) and stores the filtered frame into reference picture buffer 120 and puts encoded ALF coefficients and the optional on/off controls into the bitstream in block 345. In some embodiments, the ALF 110 does not perform one or more of blocks 310 and 320. That is, in certain embodiments, on or more of blocks 310 and 320 are optional.

To decode the video frame, the ALF 215 determines, in block 405, whether the flag is set to zero (0) or one (1). If the flag is set to zero (0), the ALF 215 stores the deblocked frame into the reference picture buffer 220 in block 410. Alternatively, if the flag is set to one (1), the ALF 215 decodes the ALF coefficients and the optional on/off controls from the bitstream in block 415. Thereafter, in block 420, the ALF 215 classifies blocks in the deblocked frame by computing and comparing multiple directional features. In certain embodiments, the ALF 215 applies a mapping function to the deblocked pixels for directional filter design. In block 430, the ALF 215 applies decoded ALF filter coefficients, with optional on/off controls, to the corresponding class of blocks. Thereafter, the ALF 215 stores the ALF filtered frame into reference picture buffer 220 in block 435. In some embodiments, the ALF 215 does not perform block 425. That is, in certain embodiments, block 425 is optional.

The examples shown in FIGURE 5 show the classified results of a frame in the HEVC test sequence Blowing-Bubble. It can be seems that pixels in Class-0 505 and Class-1 510 have dominant edges and features in horizontal and vertical directions respectively. Similarly, pixels in Class-2 515 and Class-3 520 have dominant edges and features in the two corresponding diagonal directions. For each class, a directional filter with similarity mapping will be designed.

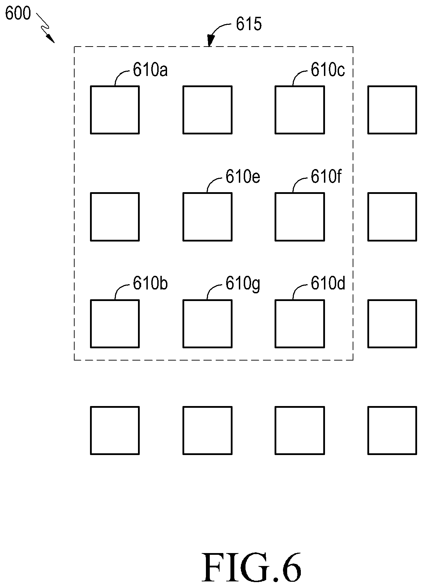

In certain embodiments, the ALF 410 is configured to employ a block-based filter adaptation based on direction of local gradients. The reconstructed blocks in a video frame are classified into four classes based on the direction of local gradients. For example, a 4-by-4 block 600 to be classified is shown in FIGURE 6. FIGURE 6 illustrates various subsets of pixels locations within the 4-by-4 block 600 for computing directional features according to embodiments of the present disclosure. The embodiment of the directional classification of block of 4-by-4 pixels 600 is for illustration only. Other embodiments could be used without departing from the scope of this disclosure. The directional class is one of Directional class-0 505, Directional class-1 510, Directional class-2 515 and Directional class-3 520.

In general, for a N-by-N block B(i,j) with the top-left pixel X(Ni,Nj), the four directional local gradients can be computed using [-1, 2, -1] weights as follows:

$$\text{grad}\_h(i,j) = \sum_{k=-L}^{L} \sum_{l=-L}^{L} \left| 2X(Ni+k, Nj+l) - X(Ni+k, Nj+l+1) - X(Ni+k, Nj+l-1) \right|$$

[Eqn. 9]

$$\text{grad}\_v(i,j) = \sum_{k=-L}^{L} \sum_{l=-L}^{L} \left| 2X(Ni+k, Nj+l) - X(Ni+k+1, Nj+l) - X(Ni+k-1, Nj+l) \right|$$

[Eqn. 10]

$$\text{grad}\_d(i,j) = \sum_{k=-L}^{L} \sum_{l=-L}^{L} \left| 2X(Ni+k, Nj+l) - X(Ni+k+1, Nj+l+1) - X(Ni+k-1, Nj+l-1) \right|$$

[Eqn. 11]

$$\text{grad}\_u(i,j) = \sum_{k=-L}^{L} \sum_{l=-L}^{L} \left| 2X(Ni+k, Nj+l) - X(Ni+k-1, Nj+l+1) - X(Ni+k+1, Nj+l-1) \right|$$

[Eqn. 12]

Alternatively, the four directional local gradients can be computed using [1, -1] weights as follows. It should be noted that similar [-1, 1] weights can be used and the corresponding equations are straightforward. Also note that the two-weight gradient computation can also be applied to pixel-based filter adaptation to modify Equation 1 through Equation 4.

$$grad\_h(i,j) = \sum_{k=-L}^{L} \sum_{l=-L}^{L} \left| X(Ni+k, Nj+l) - X(Ni+k, Nj+l+1) \right| \qquad \text{[Eqn. 13]}$$

$$grad\_v(i,j) = \sum_{k=-L}^{L} \sum_{l=-L}^{L} \left| X(Ni+k, Nj+l) - X(Ni+k+1, Nj+l) \right| \qquad \text{[Eqn. 14]}$$

$$grad\_d(i,j) = \sum_{k=-L}^{L} \sum_{l=-L}^{L} \left| X(Ni+k, Nj+l) - X(Ni+k+1, Nj+l+1) \right| \qquad \text{[Eqn. 15]}$$

$$grad\_u(i,j) = \sum_{k=-L}^{L} \sum_{l=-L}^{L} \left| X(Ni+k, Nj+l) - X(Ni+k-1, Nj+l+1) \right| \qquad \text{[Eqn. 16]}$$

Therefore, if $L=1$, the top-left 9 pixels illustrated by the 3-by-3 dash-line rectangle within the 4-by-4 block 600 will be used to compute directional features: *grad_h* measures the horizontal gradient, *grad_v* measures the vertical gradient, *grad_d* measures the gradient of 45 degree down, and *grad_u* measures the gradient of 45 degree up. Then all the pixel in block *B(i,j)* will be assigned as directional class *D(i,j)* according to the direction with minimum local gradient: *min_g(i,j)=min{grad_h(i,j), grad_v (ij), grad_d(i,j), grad_u (i,j)}* according to Equations 5 through 8. Similarly, other embodiments can be constructed such as using the top-left 4 pixels within the current 4-by-4 block to be classified.
This will classify blocks into classes with similar edge and feature directions (block-based filter adaptation). Such filter adaptation will have lower complexity as compared to pixel-based filter adaptation where the gradients are computed for every pixel.

The utilization of [1, -1] weights in gradient computation also reduce complexity as compared to using [-1, 2, -1] weight. Note that for each N-by-N block B(i,j), pixels other than the top-left pixel X(Ni,Nj) can also be used to compute directional gradient to classify all pixels in into the same directional class. Using the top-left pixel X(Ni,Nj) is just an example.

In certain embodiments, a subset of pixels in the N-by-N block can be used. For example, four of the pixels 610a through 610d from the 4-by-4 block 600 may be selected, which corresponds to a uniform sub-sampling. The directional computations are then performed on the selected pixels 610a through 610d.

Computing directional features using pixel from the top-left corner could require accessing pixels outside the current 4-by-4 block 600 to be classified. For example to compute directional features at pixel 610a, pixels on top of 610a or to the left of 610a also need to be accessed, if the features are computed based on Equation 9~12. Thus, in certain embodiments, the ALF selects pixels 605d through 605g to ensure that the calculations access only pixels from within the 4-by-4 block 600 for the directional classification.

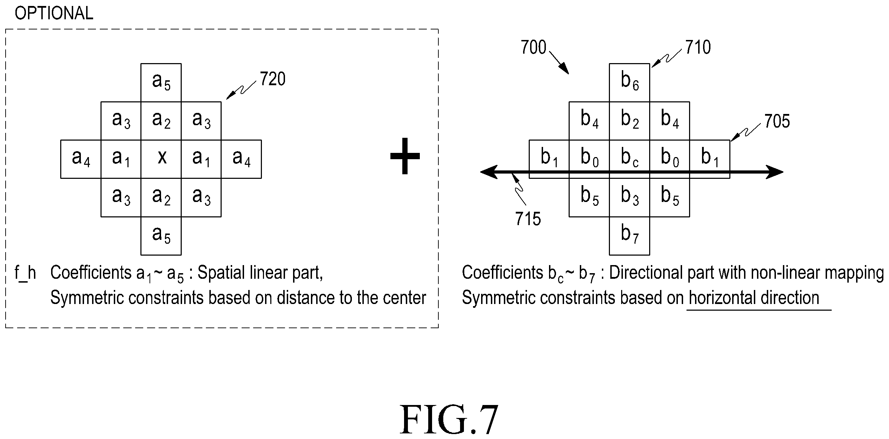

Beside classification by computing and comparing at least one directional features, a second functionality this disclosure provides is constructing directional filters wherein symmetric constraints are imposed on the filter coefficients according to the directional classification. FIGURES 7 through 10 illustrate filter coefficients for directional classes according to embodiments of the present disclosure. The embodiments of the filter coefficients shown in FIGURES 7 through 10 are for illustration only. Other embodiments could be used without departing from the scope of this disclosure. In Figures 7 through 10, the dashed-line box indicates an optional process such that the spatial linear portion can be optionally performed while the directional (right) portion can be performed alone. The embodiments with shapes in FIGURES 7 through 10 are for illustration only. Other embodiments (such as larger/smaller diamond shapes, square-shapes, etc.) could be used without departing from the scope of this disclosure.

In certain embodiments, in order to consider the proximity between pixels as well as the directional pixel value similarity, the ALF 410 filters contain a spatial linear part (with $M$ coefficients $a_m$) and another directional part (with $N$ coefficients $b_n$) with optional simple non-linear mapping. For a pixel $X_p$ to be filtered, a diamond shaped 5x5 window centered at $X_p$ and containing thirteen pixels will be used to produce the filtered results $Y_p$:

$$Y_p = \sum_{m=0}^{M-1} a_m \cdot X_m + \sum_{n=0}^{N-1} b_n \cdot X'_n \qquad \text{[Eqn. 17]}$$

where $X_m$ are the neighboring pixels, and $X'_n$ are optionally modified neighboring pixels after applying the mapping function described later in this disclosure.

The coefficients $a_m$ and $b_n$ can be obtained by solving MMSE equations for pixels in each directional class $D\_k$:

$$\min\{a_m, b_n\} \sum_{p \in D\_k} \left( I_p - \left( \sum_{m=0}^{M-1} a_m \cdot X_m + \sum_{n=0}^{N-1} b_n \cdot X'_n \right) \right)^2 \qquad \text{[Eqn. 18]}$$

where $I_p$ are the original pixel before encoding.

As shown in Equation (17) and (18), the filters restore the reconstructed frames toward the original frame by applying coefficients $a_m$ and $b_n$ to the neighboring pixels, subject to the optional similarity mapping.

FIGURES 7 through 10 illustrate the symmetric constraints of the four filters f_h 700, f_v 800, f_d 900, and f_u 1000, corresponding to pixels in each of the directional class respectively as in the example FIGURE 5. The directional filter coefficients $b_n$ exploit the characteristics of dominant edge / feature directions for pixels in each class. For example, the directional filter in f_h 700, the same coefficient is assigned only to pixels 705 on the same horizontal line 715, while pixels 710 on the same vertical line are all assigned to different coefficients. There are thirteen pixel locations within the directional filter support (include the center), while nine coefficients $b_n$ ($b_c \sim b_7$) are transmitted for f_h 700. As for the spatial linear part 720 with coefficients $a_m$, the symmetric constraints are the same for all four filters: five coefficients $a_k$ (exclude the center) are transmitted for the support of the thirteen pixels.

In certain embodiments, only the directional filter (coefficients $b_n$) is utilized, with optional simple non-linear mapping. That is, the spatial components 720, 820, 920, 1020, shown enclosed by dashed - box, are optional and are not included.

For example, using 5x5 filters, the four filters f_h, f_v, f_d, and f_u, include directional filter coefficients $b_n$ to exploit the characteristics of dominant edge / feature directions for pixels in each class. For example the directional filter in f_h 700, same coefficient is assigned only to pixels 705 on the same horizontal line 715, while pixels 710 on the same vertical line are all assigned to different coefficients. Similarly, 7x7 filters are constructed by only taking the directional parts with coefficients $b_k$ in with the center pixel (coefficients $b_c$). Other filter shapes (such as larger/smaller diamond shapes, square-shapes, etc.), with or without the optional linear spatial part, could be used without departing from the scope of this disclosure which utilizes symmetric constraints on filter coefficients according to the directional classification.

In certain embodiments, a simple non-linear mapping for pixels is utilized in the directional filter. This non-linear mapping is configured to avoid using neighboring pixels $X_n$ with large value differences from the pixel $X_p$ to be filtered. A similar principle is used in the bilateral filtering discussed in C. Tomasi and R. Manduchi, "Bilateral Filtering for Gray and Color Images", in Proc. IEEE International Conference on Computer Vision, Bombay, India 1998. In Bilateral Filtering for Gray and Color Images, smaller filter weights are assigned to pixels $X_n$ with large value differences from the pixel $X_p$. However Tomasi and Manduchi bilateral filter is not a MMSE Wiener filter: The filter weights are determined based on kernels such as Gaussian functions, instead of being calculated to minimize prediction error. Thus it does not guarantee to improve PSNR measurement and consequently is typically not used as loop filter for video coding. The embodiments of directional similarity filter with mapping in the present disclosure maintain this edge-preserving capability, while can also use MMSE computation to obtain coefficients as in Equation 18.

In embodiments of the present disclosure, the non-linear mapping function is a simple hard-thresholding as the following:

For $X_P$ to be filtered, map its neighboring pixels $X_n$ to $X_n'$:

$$X_N' = X_N \; if \; |X_N - X_P| \leq \sigma/2 \qquad \text{[Eqn. 19]}$$

$$X_N' = X_N \; if \; |X_N - X_P| > \sigma/2 \qquad \text{[Eqn. 20]}$$

That is, for a neighboring pixel $X_n$ with $|X_N - X_P| \leq \sigma/2$, the value for $X_n$ will not be changed. However if $|X_N - X_P| > \sigma/2$, it is determined that this pixel value should not be considered in the directional similarity filter. The value of $\sigma$ should take into account the degree of coding error, which is typically controlled by the quantization parameter QP: Larger QP values lead to higher degree of coding error, such that the reconstructed values could deviate farther away from their original values, while still not to the extent of having the values like pixels on the other side of an edge. Thus the filter design should be more aggressive under high QP scenario in order to suppress stronger coding artifacts, indicating the use of larger threshold $\sigma$. In certain embodiments, the threshold $\sigma$ can be determined according to the quantization parameter QP as: $\sigma = [2^{\wedge}(QP/0.6)-1] \ast 0.8$, similar to the calculation of parameter $\alpha$ and $\beta$ in the deblocking filter in H.264/AVC in P. list, A. Joch, J.Lainema, G. Bjontegaard, and M. Karczewicz, "Adaptive deblocking filter", in IEEE Trans. on Circuits and Systems for Video Technology (CSVT), 2003. Other QP dependent functions could also be used to calculate threshold $\sigma$.

At the encoder side, pixels $X_n'$ after mapping and pixel $X_n$ without mapping will be used in Equation (18) to compute coefficients $a_m$ and $b_n$ simultaneously. Filtered frame will then be produced by applying filters as in Equation (17). The filter coefficients will be encoded and transmitted in the bitstream. At the decoder side, after the reconstructed frame is generated, ALF process is performed by first classifying the pixels or blocks based on directional features, and then applying the decoded filter coefficients $a_m$ and $b_n$ to pixel $X_n$ without mapping and to pixels $X_n'$ after mapping, respectively.

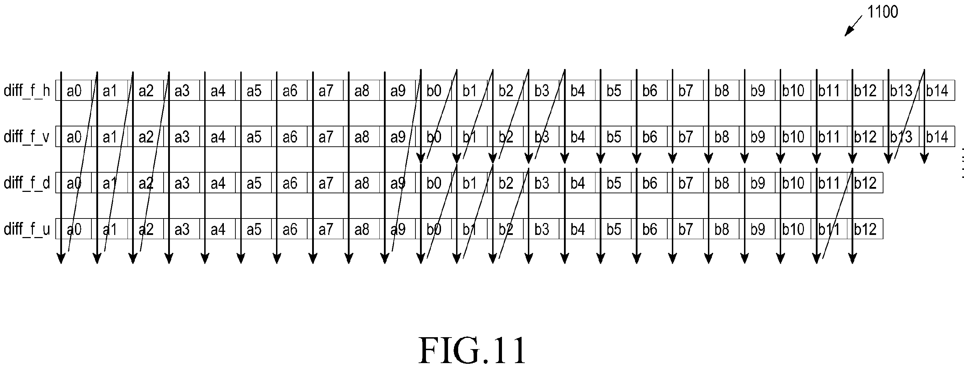

FIGURE 11 illustrates a Scanning order for coefficient differences according to embodiments of the present disclosure. The embodiment of the scanning order 1100 shown in FIGURE 11 is for illustration only. Other embodiments could be used without departing from the scope of this disclosure.

In certain embodiments, the ALF 110 is configured to employ efficient coding of filter coefficients. To further reduce the side information of transmitting filter coefficients, embodiments of the present disclosure provide two techniques for coding the coefficients prior to sending the coefficients to the "Entropy Coding" block 115 (in FIGURE 1): a) Differential coding of filter coefficients between frames, and b) Scanning coefficients across filters within a frame.

In certain embodiments, the ALF 110 employs a differential coding of filter coefficients between frames. For the filter design, there will be four filters for a frame that utilizes adaptive loop filtering. The size of filter is fixed across different frames. The corresponding filters at different frames demonstrate similarity in their coefficients. Thus for frame m, instead of the ALF 110 sending the coefficients of f_h$_m$, f_v$_m$, f_d$_m$, and f_u$_m$ directly to the entropy coding 115, differential coding is applied to only send the differences between filter coefficients of frame m and filter coefficients of previously encoded frame n, which also utilizes the adaptive loop filter 110. The differences are computed as follows:

$$diff\_f\_h_m = f\_h_m - f\_h_n \qquad \text{[Eqn. 21]}$$

$$diff\_f\_v_m = f\_v_m - f\_v_n \qquad \text{[Eqn. 22]}$$

$$diff\_f\_d_m = f\_d_m - f\_d_n \qquad \text{[Eqn. 23]}$$

$$diff\_f\_u_m = f\_u_m - f\_u_n \qquad \text{[Eqn. 24]}$$

In certain embodiments, to achieve the best differential coding results, the ALF 110 selects frame n as the temporally closest one to frame m, such that the two frames will have the most similar characteristics and thus higher similarity in their filters. Note that to frame m, this temporally closest frame n might not be the closest one in encoding order. For example, in hierarchical B coding structure with GOP size 8, the encoding order will be frames 0, 8, 4, 2, 6, 1, 3, 5, 7.... For frame m = 1, the closest one in encoder order is frame 6, while frame 0 or frame 2 are actually the temporally closest ones to frame 1. If all these frames use adaptive loop filtering, n should be selected as 0 or 2, instead of 6.

Another aspect with regards to the filter coefficients is that, across frames, coefficients $a_k$ from the spatial part tend to have smaller variations than coefficients $b_k$ from the directional filter part. After performing differential coding, differences in $a_k$ are typically smaller than differences in $b_k$. If all the differences of one filter (such as $a_1 \sim a_5$ and $b_c \sim b_7$ of diff_f_hm) are sent followed by all the differences of another filter (say diff_f_vm) to the entropy coder 415, it is likely the entropy coder 415 will see the differences increase within the first filter diff f hm, and then decrease when it get differences from another filter (such as $b_7$ of diff_f_hm followed by $a_1$ of diff_f_vm), and then increase again within the second filter diff_f_vm. This variation would lead to lower efficiency for context based entropy coder such as CABAC.

In certain embodiments, the ALF 110 is configured to use the scanning order 1100 for coefficient differences across filters within a frame. Differences of a0 of all filters will be scanned first followed by differences of a1. After all the $a_k$ coefficients, the ALF 110 will then scan differences $b_k$ for $diff\_f\_h_m$ and $diff\_f\_v_m$, and finally scan differences $b_k$ for $diff\_f\_d_m$ and $diff\_f\_u_m$. By doing so, the ALF 110 will send the differences to the entropy coder 115 with a gradually increasing order without sudden drops from large to small.

Note that the scanning order in 1100 can also be applied to filter coefficients themselves, not only to the filter coefficient differences. For example in 1100, each elements can be the coefficients from the filters $f\_h_m$, $f\_v_m$, $f\_d_m$, $f\_u_m$.

Besides classifying blocks into 4 directional classes as described above, in certain embodiments, the ALF 110 and 215 is configured to construct the filters by classifying blocks into two directional classes by computing and comparing for example two directional features in horizontal and vertical directions. Each directional class can optionally further be classified into more classes based on measurements of the strength of local variation.

Embodiments of the present disclosure provide examples of classification of 8 filters with two directional classes. To classify a 4x4 block B with pixels {X(i,j) |i=0,1,2,3 ; j=0,1,2,3}, the following 3 values are computed according to Equations 25 through 29 (reproduced here):

$$H_B = \sum_{i=0,2} \sum_{j=0,2} H(i,j) \qquad \text{[Eqn. 25]}$$

$$V_B = \sum_{i=0,2} \sum_{j=0,2} V(i,j) \qquad \text{[Eqn. 26]}$$

$$L_B = \left(H_B' + V_B'\right) << 2 \qquad \text{[Eqn. 27]}$$

where

$$H(i,j) = abs\left(X(i,j) << 1 - X(i,j-1) - X(i,j+1)\right) \qquad \text{[Eqn. 28]}$$

$$V(i, j) = abs(X(i, j) << 1 - X(i - 1, j) - X(i + 1, j))$$ [Eqn. 29]

or

$$H(i, j) = abs(X(i, j) - X(i, j + 1))$$ [Eqn. 30]

$$V(i, j) = abs(X(i, j) - X(i + 1, j))$$ [Eqn. 31]

Note that the computation of above corresponds to feature computations at uniform sub-sampling of pixels as depicted by 610a through 610d. Other sub-sampling as described earlier in this disclosure can also be utilized. Then, for each directional class, there are four levels. The class label $C_B$ of block B is obtained from the Table 2 "varTab_8" below, as CB = varTab_8 [dir][avgVar]:

Table 2: An example of **varTab_8** for classify blocks into 8 classes

| | *AvgVar* | | | | | | | | | | | | | | | |
|---|---|---|---|---|---|---|---|---|---|---|---|---|---|---|---|
| | **0** | **1** | **2** | **3** | **4** | **5** | **6** | **7** | **8** | **9** | **10** | **11** | **12** | **13** | **14** | **15** |
| *dir 0* | 0 | 1 | 1 | 2 | 2 | 2 | 2 | 3 | 3 | 3 | 3 | 3 | 3 | 3 | 3 | 3 |
| *dir 1* | 4 | 5 | 5 | 6 | 6 | 6 | 6 | 7 | 7 | 7 | 7 | 7 | 7 | 7 | 7 | 7 |
| dir = 1, if $V_B > H_B$ | | | | | | | | | | | | | | | | |

$$dir = 0, \text{ otherwise}$$ [Eqn. 32]

$$avgVar = max\{15, (L_B * 1024) >> (3 + BitDepthY)\}$$ [Eqn. 33]

avgVar in Equation 33 is a normalized value of $L_B$ from Equation 27, to measure the strength of variation in the block B. Other measurements using the sum of $V_B$ and $H_B$ can be used

Table 2 is just an example embodiment to utilize Equations 32 and 33. Other tables can also be constructed using similar principles with labels that cover larger avgVar range as they go from the left to right in the tables.

In Table 2, the labels run in the order of magnitude (avgVar) first followed by directional class (dir). In the case where the label-merging process follows a 1D pattern (that is, only labels with consecutive values can be merged together), Table 2 results in merging only for different magnitudes (*avgVar)* in the same directional class (*dir),* but not the other way around. Thus embodiments of the present disclosure present varTab_8 in which the labels run in the order of directional class (*dir*) first followed by magnitude (*avgVar),* as below in Table 3.

Table 3: Another example ofvarTab_8 for classify blocks into 8 classes

| | *avgVar* | | | | | | | | | | | | | | | |
|---|---|---|---|---|---|---|---|---|---|---|---|---|---|---|---|---|
| | **0** | **1** | **2** | **3** | **4** | **5** | **6** | **7** | **8** | **9** | **10** | **11** | **12** | **13** | **14** | **15** |
| *dir 0* | 0 | 2 | 2 | 4 | 4 | 4 | 4 | 6 | 6 | 6 | 6 | 6 | 6 | 6 | 6 | 6 |
| *dir 1* | 1 | 3 | 3 | 5 | 5 | 5 | 5 | 7 | 7 | 7 | 7 | 7 | 7 | 7 | 7 | 7 |

Certain embodiments of the present disclosure provide classification of 8 filters with two directional classes and Scaled label table. In Table 2 and 3, for a given directional class (dir), there are more than half of the elements being assigned the same label (labels 3 and 7 in Table 2; labels 6 and 7 in Table 3). This indicates that a double of the value of avgVar (computed from LB) can be used, and the label distributions can be scaled accordingly to improve the classification in magnitude domain. In the following examples, the value $L_B$ is scaled by two (doubled) and use modified tables varTab_8S.

To classify a 4x4 block B with pixels {X(i,j)|i=0,1,2,3 ; j=0,1,2,3}, the following 3 values are computed:

$$H_B = \sum_{i=0,2} \sum_{j=0,2} H(i,j) \qquad [\text{Eqn. 34}]$$

$$V_B = \sum_{i=0,2} \sum_{j=0,2} V(i,j) \qquad [\text{Eqn. 35}]$$

$$L_B = \left(H_B + V_B\right) << 1 \qquad [\text{Eqn. 36}]$$

where $H(i,j)=abs(X(i,j)<<1-X(i,j-1)-X(i,j+1))$, $V(i,j)=abs(X(i,j)<<1-X(i-1,j)-X(i+1,j))$; or

$$H(i,j)=abs(X(i,j)-X(i,j+1)), \ V(i,j)=abs(X(i,j)-X(i+1,j))$$

Table 4: An example of *scaled* **varTab_8S** for classify blocks into 8 classes

| | avgVar | | | | | | | | | | | | | | | |
|---|---|---|---|---|---|---|---|---|---|---|---|---|---|---|---|---|
| | **0** | **1** | **2** | **3** | **4** | **5** | **6** | **7** | **8** | **9** | **10** | **11** | **12** | **13** | **14** | **15** |
| *dir* 0 | 0 | 0 | 1 | 1 | 1 | 1 | 1 | 2 | 2 | 2 | 2 | 2 | 2 | 2 | 2 | 3 |
| *dir* 1 | 4 | 4 | 5 | 5 | 5 | 5 | 5 | 6 | 6 | 6 | 6 | 6 | 6 | 6 | 6 | 7 |
| *dir* = 1, if $V_B > H_B$ <br> *dir* = 0, otherwise | | | | | | | | | | | | | | | | |

$$avgVar=max\{15, (L_B*1024)>>(3+BitDepthY)\}$$

In this example, while Equations 34 and 35 are the same as Equations 23 and 24, the computation of LB in Equation 25 is changed as shown in Equation 36 with only shift 1 bit, thus doubling its value. Label distribution in Table 4 is scaled to improve the classification of the doubled $L_B$.

Again, similar to the principle used in constructing Table 3, Table 4 is changed such that the labels run in a different order, as in Table 5 below.

Table 5: Another example of *scaled* **varTab_8S** for classify blocks into 8 classes

| | avgVar | | | | | | | | | | | | | | | |
|---|---|---|---|---|---|---|---|---|---|---|---|---|---|---|---|---|
| | **0** | **1** | **2** | **3** | **4** | **5** | **6** | **7** | **8** | **9** | **10** | **11** | **12** | **13** | **14** | **15** |
| *dir* 0 | 0 | 0 | 2 | 2 | 2 | 2 | 2 | 4 | 4 | 4 | 4 | 4 | 4 | 4 | 4 | 6 |
| *dir* 1 | 1 | 1 | 3 | 3 | 3 | 3 | 3 | 5 | 5 | 5 | 5 | 5 | 5 | 5 | 5 | 7 |

Table 4 and 5 are just example embodiments to utilize scaled value of $L_B$. Other scaling and the corresponding tables can also be constructed using similar principles:

1. The label distributions should follow accordingly to how the value $L_B$ (hence avgVar) is scaled; and
2. Labels will cover larger avgVar range as they go from the left to right in the tables.

Embodiment example of classification using Hybrid label table:

It has been observed that for smaller avgVar index, directional classification using index dir might not provide best efficiency, due to the lack of directional features in the corresponding blocks with smaller $L_B$ values. Thus, in certain embodiments, a hybrid label table is constructed, where the labels for smaller avgVar index are assigned across different direction index (dir). An example of such design varTab_8S_HB, using scaled LB, is provided as follows. (Note that table can be constructed accordingly if scaling of $L_B$ is not used.)

To classify a 4x4 block B with pixels {X(i,j)|i=0,1,2,3 ; j=0,1,2,3}, the following three values are computed using Equations 34 through 36, reproduced here:

$$H_B = \sum_{i=0,2} \sum_{j=0,2} H(i,j) \qquad \text{[Eqn. 34]}$$

$$V_B = \sum_{i=0,2} \sum_{j=0,2} V(i,j) \qquad \text{[Eqn. 35]}$$

$$L_B = \left(H_B + V_B\right) << 1 \qquad \text{[Eqn. 36}$$

where $H(i,j)=abs(X(i,j)<<1-X(i,j-1)-X(i,j+1))$, $V(i,j)=abs(X(i,j)<<1-X(i-1,j)-X(i+1,j))$;
or $H(i,j)=abs(X(i,j)-X(i,j+1))$, $V(i,j)=abs(X(i,j)-X(i+1,j))$

Table 6: An example of varTab_8S_HB for classify a 4x4 block B into 8 classes

|  | avgVar | | | | | | | | | | | | | | | |
|---|---|---|---|---|---|---|---|---|---|---|---|---|---|---|---|---|
|  | **0** | **1** | **2** | **3** | **4** | **5** | **6** | **7** | **8** | **9** | **10** | **11** | **12** | **13** | **14** | **15** |
| *dir* 0 | *0* | *1* | *1* | 2 | 2 | 2 | 2 | 2 | 4 | 4 | 4 | 4 | 4 | 4 | 4 | 6 |
| *dir* 1 | *0* | *1* | *1* | 3 | 3 | 3 | 3 | 3 | 5 | 5 | 5 | 5 | 5 | 5 | 5 | 7 |
| *dir* = 1, if $V_B$>$H_B$ <br> *dir* = 0,otherwise | | | | | | | | | | | | | | | | |

$$avgVar = \max\{15, (L_B*1024)>>(3+BitDepthY)\}$$

Table 6 is just an example embodiment to constructed hybrid label table. Other tables (with or without scaling) can also be constructed using similar principles:

  1. The labels for smaller avgVar index are assigned across different direction index (dir);
  2. Labels will cover larger avgVar range as they go from the left to right in the tables; and optionally,
  3. The label distributions should follow accordingly to how the value $L_B$ (hence avgVar) is scaled.

Although the present disclosure has been described with an exemplary embodiment, various changes and modifications may be suggested to one skilled in the art. It is intended that the present disclosure encompass such changes and modifications as fall within the scope of the appended claims.

**Claims**

1. A method for adaptive loop filtering, the method comprising:

designing (315) multiple filters corresponding to a predetermined number of classes by classifying (305) blocks in a video frame into a predetermined number of classes based on at least one local directional feature of each block, wherein each block comprises a plurality of pixels;

encoding filter coefficients of the multiple filters; and

applying (325) the multiple filters having the encoded filter coefficients to respective blocks corresponding to each of the classes,

wherein encoding the filter coefficients of the multiple filters comprises computing, encoding, and transmitting filter coefficient differences between the filter coefficients and filter coefficients used during encoding of a previously encoded video frame .

2. The method as set forth in Claim 1, wherein classifying comprises computing and comparing the at least one local directional feature.

3. The method as set forth in Claim 1, further comprising:
selecting temporally closest frames as previously encoded video frames to compute, encode, and transmit the filter coefficients differences.

4. The method as set forth in Claim 1, wherein the filter coefficients used during encoding of the previously encoded video frame comprise filter coefficients in filters corresponding to the same directional class in the video frame being encoded and in the previously encoded video frame.

5. The method as set forth in Claim 1, further comprising:
encoding the filter coefficients in an order of scanning across one coefficient position of all filters followed by scanning across another coefficient position of all filters.

6. The method as set forth in Claim 1, wherein the filter coefficients are configured according to the at least one direction, the at least one direction comprising at least one of horizontal, vertical, diagonal top-left to bottom-right, and diagonal bottom-left to top-right directions.

7. The method as set forth in Claim 1, wherein the at least one local directional feature comprises a block-based feature computed as the summation of at least one difference between pixels in a block included in the video frame along at least one direction,
wherein the at least one difference between pixels is computed at a subset of pixels within the block.

8. The method as set forth in Claim 7, wherein the subset of pixels comprises one of pixels from uniform sub-sampling, pixels from quincunx sub-sampling, pixels from center positions within the block, and pixels from top-left positions within the block to be classified.

9. A method for adaptive loop filtering, the method comprising:

decoding (415) filter coefficients of multiple filters corresponding to a predetermined number of classes by classifying (420) blocks in a video frame into the predetermined number of classes based on at least one local directional feature of each block, wherein each block comprises a plurality of pixels; and

applying (430) the multiple filters having the decoded filter coefficients to respective blocks corresponding to each of the classes,

wherein decoding the filter coefficients of the multiple filters comprises decoding filter coefficient differences, and adding the filter coefficient differences to filter coefficients used during decoding of a previously decoded video frame.

10. The method as set forth in Claim 9, further comprising:
selecting temporally closest frames as the previously decoded video frame to which the corresponding filter coefficients are added.

11. The method as set forth in Claim 9, wherein the filter coefficients used during encoding of the previously encoded video frame comprise filter coefficients in filters corresponding to the same directional class in the video frame and in the previously decoded video frame.

12. The method as set forth in Claim 9, further comprising:
decoding the filter coefficients in an order of scanning across one coefficient position of all filters followed by scanning across another coefficient position of all filters.

13. The method as set forth in Claim 9, wherein the filter coefficients are configured according to the at least one direction, the at least one direction comprising at least one of horizontal, vertical, diagonal top-left to bottom-right, and diagonal bottom-left to top-right directions.

14. The method as set forth in Claim 9, wherein the at least one local directional feature comprises a block-based feature computed as the summation of at least one difference between pixels in a block included in the video frame along at least one direction,
wherein the at least one difference between pixels is computed at a subset of pixels within the block.

15. The method as set forth in Claim 9, wherein the subset of pixels comprises one of pixels from uniform sub-sampling, pixels from quincunx sub-sampling, pixels from center positions within the block, and pixels from top-left positions within the block to be classified.

16. An apparatus for adaptive loop filtering, wherein the apparatus is configured to perform the method according to any of the claims 1 to 8.

17. An apparatus for adaptive loop filtering, wherein the apparatus is a decoder configured to perform the method according to any of the claims 9 to 15.

**Patentansprüche**

1. Verfahren zur Filteranpassung, wobei das Verfahren Folgendes umfasst:

   Entwerfen (315) mehrerer Filter, die einer vorherbestimmten Zahl von Klassen entsprechen, indem man Blöcke in einem Videobild in eine vorherbestimmte Zahl von Klassen klassifiziert (305), basierend auf mindestens einem lokalen Richtungsmerkmal jedes Blocks, wobei jeder Block eine Vielzahl von Pixeln umfasst;
   Codierung von Filterkoeffizienten der mehreren Filter; und
   Anbringen (325) der mehreren Filter, die die codierten Filterkoeffizienten aufweisen, an betreffenden Blöcken, die jeder Klasse entsprechen,
   wobei die Codierung der Filterkoeffizienten der mehreren Filter die Berechnung, Codierung und Übertragung von Filterkoeffizienten-Unterschieden zwischen den Filterkoeffizienten und Filterkoeffizienten, die während der Codierung eines vorher codierten Videobilds verwendet wurden, umfasst.

2. Verfahren nach Anspruch 1, wobei die Klassifizierung die Berechnung und den Vergleich des mindestens einen lokalen Richtungsmerkmals umfasst.

3. Verfahren nach Anspruch 1, das des Weiteren Folgendes umfasst:
   Auswahl zeitlich nächstliegender Bilder als vorher codierte Videobilder, um die Filterkoeffizienten-Unterschiede zu berechnen, codieren und übertragen.

4. Verfahren nach Anspruch 1, wobei die Filterkoeffizienten, die während der Codierung des vorher codierten Videobilds verwendet wurden, Filterkoeffizienten in Filtern umfassen, die in dem gerade codierten Videobild und in dem vorher codierten Videobild derselben Richtungsklasse entsprechen.

5. Verfahren nach Anspruch 1, das des Weiteren Folgendes umfasst:
   Codieren der Filterkoeffizienten, mit Scannen über eine Koeffizientenposition aller Filter, gefolgt von einem Scannen über eine andere Koeffizientenposition aller Filter.

6. Verfahren nach Anspruch 1, wobei die Filterkoeffizienten entsprechend der mindestens einen Richtung konfiguriert sind, wobei die mindestens eine Richtung mindestens eine der folgenden Richtungen umfasst: waagrecht, senkrecht, diagonal von oben links nach unten rechts und diagonal von unten links nach oben rechts.

7. Verfahren nach Anspruch 1, wobei das mindestens eine lokale Richtungsmerkmal ein blockbasiertes Merkmal umfasst, berechnet als die Summierung von mindestens einem Unterschied zwischen Pixeln in einem Block, der in dem Videobild inbegriffen ist, entlang mindestens einer Richtung,
   wobei der mindestens eine Unterschied zwischen Pixeln an einer Teilmenge von Pixeln innerhalb des Blocks berechnet wird.

**8.** Verfahren nach Anspruch 7, wobei die Teilmenge von Pixeln eines der Folgenden umfasst: Pixel aus gleichmäßiger Unterabtastung, Pixel aus einer Quincunx-Unterabtastung, Pixel aus Mittelpositionen innerhalb des Blocks und Pixel aus Oben-links-Positionen innerhalb des zu klassifizierenden Blocks.

**9.** Verfahren zur Filteranpassung, wobei das Verfahren Folgendes umfasst:

Decodieren (415) von Filterkoeffizienten mehrerer Filter, die einer vorherbestimmten Zahl von Klassen entsprechen, indem man Blöcke in einem Videobild in die vorherbestimmte Zahl von Klassen klassifiziert (420), basierend auf mindestens einem lokalen Richtungsmerkmal jedes Blocks, wobei jeder Block eine Vielzahl von Pixeln umfasst; und
Anbringen (430) der mehreren Filter, die die decodierten Filterkoeffizienten aufweisen, an betreffenden Blöcken, die jeder Klasse entsprechen,
wobei das Decodieren der Filterkoeffizienten der mehreren Filter das Decodieren von Filterkoeffizienten-Unterschieden umfasst, und die Addition der Filterkoeffizienten-Unterschiede zu Filterkoeffizienten, die während des Decodierens eines vorher decodierten Videobildes verwendet wurden.

**10.** Verfahren nach Anspruch 9, das des Weiteren Folgendes umfasst:
Auswählen zeitlich nächstliegender Bilder als vorher decodierte Videobilder, zu dem die entsprechenden Filterkoeffizienten hinzugefügt werden.

**11.** Verfahren nach Anspruch 9, wobei die Filterkoeffizienten, die während der Codierung des vorher codierten Videobilds verwendet werden, Filterkoeffizienten in Filtern umfassen, die in dem Videobild und in dem vorher decodierten Videobild derselben Richtungsklasse entsprechen.

**12.** Verfahren nach Anspruch 9, das des Weiteren Folgendes umfasst:
Decodieren der Filterkoeffizienten mit Scannen über eine Koeffizientenposition aller Filter, gefolgt von Scannen über eine andere Koeffizientenposition aller Filter.

**13.** Verfahren nach Anspruch 9, wobei die Filterkoeffizienten entsprechend der mindestens einen Richtung konfiguriert sind, wobei die mindestens eine Richtung mindestens eine der folgenden Richtungen umfasst: waagrecht, senkrecht, diagonal von oben links nach unten rechts und diagonal von unten links nach oben rechts.

**14.** Verfahren nach Anspruch 9, wobei das mindestens eine lokale Richtungsmerkmal ein blockbasiertes Merkmal umfasst, berechnet als die Summierung von mindestens einem Unterschied zwischen Pixeln in einem Block, der in dem Videobild inbegriffen ist, entlang mindestens einer Richtung,
wobei der mindestens eine Unterschied zwischen Pixeln an einer Teilmenge von Pixeln innerhalb des Blocks berechnet wird.

**15.** Verfahren nach Anspruch 9, wobei die Teilmenge von Pixeln eines der Folgenden umfasst: Pixel aus gleichmäßiger Unterabtastung, Pixel aus einer Quincunx-Unterabtastung, Pixel aus Mittelpositionen innerhalb des Blocks und Pixel aus Oben-links-Positionen innerhalb des zu klassifizierenden Blocks.

**16.** Vorrichtung zur Filteranpassung, wobei die Vorrichtung konfiguriert ist, um das Verfahren gemäß einem ist besser der Ansprüche 1 bis 8 auszuführen.

**17.** Vorrichtung zur Filteranpassung, wobei die Vorrichtung ein Decoder ist, der konfiguriert ist, um das Verfahren gemäß einem der Ansprüche 9 bis 15 auszuführen.

**Revendications**

**1.** Procédé de filtrage de boucle adaptatif, le procédé comprenant :

concevoir (315) des filtres multiples correspondant à un nombre prédéterminé de classes en classifiant (305) des blocs d'une trame vidéo dans un nombre prédéterminé de classes sur la base d'au moins une fonctionnalité directionnelle locale de chaque bloc, où chaque bloc comprend une pluralité de pixels ;
coder des coefficients de filtre des filtres multiples ; et
appliquer (325) les filtres multiples ayant les coefficients de filtre codés à des blocs respectifs correspondant à chacune des classes,
où le codage des coefficients de filtre des filtres multiples comprend le calcul, le codage et la transmission de différences de coefficient de filtre entre les coefficients de filtre et des coefficients de filtre utilisés lors du codage d'une trame vidéo codée précédemment.

2. Procédé selon la revendication 1, où la classification comprend calculer et comparer l'au moins une fonctionnalité directionnelle locale.

3. Procédé selon la revendication 1, comprenant en outre :
sélectionner des trames les plus proches temporellement en tant que trames vidéo codées précédemment afin de calculer, coder et transmettre les différences de coefficients de filtre.

4. Procédé selon la revendication 1, où les coefficients de filtre utilisés lors du codage de la trame vidéo codée précédemment comprennent des coefficients de filtre dans des filtres correspondant à la même classe directionnelle dans la trame vidéo en cours de codage et dans la trame de vidéo codée précédemment.

5. Procédé selon la revendication 1, comprenant en outre :
coder les coefficients de filtre dans un ordre de balayage sur une position de coefficient de tous les filtres suivi d'un balayage sur une autre position de coefficient de tous les filtres.

6. Procédé selon la revendication 1, où les coefficients de filtre sont configurés en fonction de l'au moins une direction, l'au moins une direction comprenant au moins l'une parmi les directions horizontale, verticale, diagonale de la partie supérieure gauche à la partie inférieure droite et diagonale de la partie inférieure gauche à la partie supérieure droite.

7. Procédé selon la revendication 1, où l'au moins une fonctionnalité directionnelle locale comprend une fonctionnalité basée sur des blocs calculée comme la somme d'au moins une différence entre pixels dans un bloc inclus dans la trame vidéo le long d'au moins une direction,
où l'au moins une différence entre pixels est calculée dans un sous-ensemble de pixels du bloc.

8. Procédé selon la revendication 7, où le sous-ensemble de pixels comprend les uns parmi des pixels de sous-échantillonnage uniforme, des pixels de sous-échantillonnage en quinconce, des pixels des positions centrales du bloc et des pixels des positions supérieures gauches du bloc pour être classifiés.

9. Procédé de filtrage de boucle adaptatif, le procédé comprenant :

décoder (415) des coefficients de filtre de filtres multiples correspondant à un nombre prédéterminé de classes en classifiant (420) des blocs dans une trame vidéo dans le nombre prédéterminé de classes sur la base d'au moins une fonctionnalité directionnelle locale de chaque bloc, où chaque bloc comprend une pluralité de pixels ; et

appliquer (430) les filtres multiples ayant les coefficients de filtre décodés à des blocs respectifs correspondant à chacune des classes,
où décoder les coefficients de filtre des filtres multiples comprend décoder des différences de coefficient de filtre, et ajouter les différences de coefficient de filtre pour filtrer des coefficients utilisés lors du décodage d'une trame vidéo décodée précédemment.

10. Procédé selon la revendication 9, comprenant en outre :
sélectionner des trames les plus proches temporellement en tant que trame vidéo décodée précédemment auxquelles les coefficients de filtre correspondants sont ajoutés.

11. Procédé selon la revendication 9, où les coefficients de filtre utilisés lors du codage de la trame vidéo codée précédemment comprennent des coefficients de filtre dans des filtres qui correspondent à la même classe directionnelle dans la trame vidéo et dans la trame vidéo décodée précédemment.

12. Procédé selon la revendication 9, comprenant en outre :
décoder les coefficients de filtre dans un ordre de balayage à travers une position de coefficient de tous les filtres suivi d'un balayage à travers une autre position de coefficient de tous les filtres.

13. Procédé selon la revendication 9, où les coefficients de filtre sont configurés en fonction de l'au moins une direction, l'au moins une direction comprenant au moins l'une parmi les directions horizontale, verticale, diagonale de la partie supérieure gauche à la partie inférieure droite et diagonale de la partie inférieure gauche à la partie supérieure droite.

14. Procédé selon la revendication 9, où l'au moins une fonctionnalité directionnelle locale comprend une fonctionnalité basée sur des blocs calculée comme la somme d'au moins une différence entre pixels dans un bloc inclus dans la trame vidéo le long d'au moins une direction,
où l'au moins une différence entre pixels est calculée dans un sous-ensemble de pixels du bloc.

15. Procédé selon la revendication 9, où le sous-ensemble de pixels comprend les uns parmi des pixels de sous-échantillonnage uniforme, des pixels de sous-échantillonnage en quinconce, des pixels des positions centrales du bloc et des pixels des positions supérieures gauches du bloc pour être classifiés.

16. Dispositif de filtrage de boucle adaptatif, où le dispositif est configuré pour effectuer le procédé selon l'une quelconque des revendications 1 à 8.

17. Dispositif de filtrage de boucle adaptatif, où le dispositif est un décodeur configuré pour effectuer le procédé selon l'une quelconque des revendications 9 à 15.

FIG.1

EP 2 477 403 B1

FIG.2

```
                                    ┌─────────────────────────┐
         ( Start )                  │ Apply computed and encoded│─ 325
             │                      │ filter coefficients to the│
             ▼      ─ 305           │ corresponding class of blocks│
  ┌──────────────────────┐         └─────────────────────────┘
  │ Classify blocks    in │                     │
  │ the deblocked frame, by│                    ▼      ─ 330
  │ computing and comparing│        ┌─────────────────────────┐
  │ multiple directional   │        │ Compute rate-distortion cost│
  │ features               │        │ for applying ALF, and compare│
  └──────────────────────┘          │ against not applying ALF │
             │                      └─────────────────────────┘
             ▼      ─ 310                        │
  ┌──────────────────────┐                       ▼
  │ (Optional)             │                     ◇  ─ 335
  │ Apply mapping function to│        Yes    ╱ Rate-distortion ╲    No
  │ deblocked pixels, for  │◄─────────╱   cost reduction after  ╲──────►
  │ directional filter design│        ╲      applying ALF?      ╱
  └──────────────────────┘            ╲                    ╱
             │                          ◇
             ▼      ─ 315
  ┌──────────────────────┐
  │ Compute and encode filter│
  │ coefficients for each  │
  │ directional filters designed for│
  │ the corresponding class of│
  │ blocks                 │
  └──────────────────────┘
             │
             ▼      ─ 320
  ┌──────────────────────┐
  │ (Optional)             │
  │ Determine filter on/off│
  │ control on block-basis │
  └──────────────────────┘
```

· Set ALF_flag = 1
· Store ALF filtered frame into reference picture buffer.
· Put encoded ALF coefficients and the optional on/off controls into the bitstream          ─ 345

· Set ALF_flag = 0
· Store deblocked frame into reference picture buffer.          ─ 340

( End )

FIG.3

Start

405

Yes ◄ ALF_flag = 1? ► No

415

Decode ALF coefficients and
the optional on/off controls
from the bitstream

420

Classify blocks          in
the deblocked frame, by
computing and comparing
multiple directional features

425

(Optional)
Apply mapping function to
deblocked pixels, for
directional filter design

430

Apply decoded ALF filter
coefficients, with optional
on/off control , to the
corresponding class of blocks

430

Store ALF filtered frame into
reference picture buffer

410

Store deblocked frame into
reference picture buffer

End

FIG.4

Directional class 0

Directional class 1

Directional class 2

Directional class 3

# FIG.5

600

615

610a 610c

610e 610f

610b 610g 610d

# FIG.6

700

710

705

715

Coefficients $b_c \sim b_7$ : Directional part with non-linear mapping
Symmetric constraints based on horizontal direction

720

OPTIONAL

f_h   Coefficients $a_1 \sim a_5$ : Spatial linear part,
Symmetric constraints based on distance to the center

FIG.7

OPTIONAL

f_v   Coefficients $a_1 \sim a_5$ : Spatial linear part,
      Symmetric constraints based on distance to the center

Coefficients $b_c \sim b_7$ : Directional part with non-linear mapping
Symmetric constraints based on vertical direction

FIG.8

OPTIONAL

f_d  Coefficients $a_1 \sim a_5$ : Spatial linear part,
Symmetric constraints based on distance to the center

Coefficients $b_c \sim b_6$ : Directional part with non-linear mapping
Symmetric constraints based on 45 degree down

FIG.9

OPTIONAL

| | $a_5$ | |
|---|---|---|
| $a_3$ | $a_2$ | $a_3$ |

$a_4$ $a_1$ X $a_1$ $a_4$

| $a_3$ | $a_2$ | $a_3$ |
| | $a_5$ | |

/ 1020

f_u  Coefficients $a_1 \sim a_5$ : Spatial linear part,
Symmetric constraints based on distance to the center

Coefficients $b_c \sim b_6$ : Directional part with non-linear mapping
Symmetric constraints based on 45 degree up

FIG.10

EP 2 477 403 B1

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008075247 A
- US 2010158103 A
- WO 2009126299 A
- WO 9740630 A
- US 2008152017 A
- WO 2011112237 A

### Non-patent literature cited in the description

- **P. LAI ; Y. SU ; P. YIN ; C. GOMILA ; A. ORTEGA.** Adaptive filtering for video coding with focus change. *Proc. IEEE International Conference on Acoustics, Speech, and Signal Processing (ICASSP) 2007,* April 2007, 1.661-664
- **P. LAI ; Y. SU ; P. YIN ; C. GOMILA ; A. ORTEGA.** Adaptive filtering for cross-view prediction in multi-view video coding. *Proc. SPIE Visual Communications and Image Processing(VCIP) 2007,* January 2007
- **T. CHUJOH ; A. TANIZAWA ; T. YAMAKAGE.** Block-based adaptive loop filter. *ITU-SG16 Q6 VCEG-AJ13,* October 2008
- **T. CHUJOH ; N. WADA ; T. WATANABE ; G. YASUDA ; T. YAMAKAGE.** Specification and experimental results of quadtree-based adaptive loop filter. *ITU-SG16 Q6 VCEG-AK22*
- **T. WATANABE ; N. WADA ; G. YASUDA ; A. TANIZAWA ; T. CHUJOH ; T. YAMAKAGE.** In-loop filter using block-based filter control for video coding. *Proc. IEEE International Conference on Image Processing (ICIP),* 2009, 1013-1016
- **M. KARCZEWICZ ; P. CHEN ; R. JOSHI ; X. WANG ; W.-J. CHIEN ; R. PANCHAL.** Specification and experimental results of quadtree-based adaptive loop filter. *Video coding technology proposal by Qualcomm Inc.'' JCTVC-A121,* April 2010
- **YU LIU.** Unified loop filter for video compression. *IEEE Trans. on Circuits and Systems for Video technology,* October 2010, vol. 20 (10
- **C. TOMASI ; R. MANDUCHI.** Bilateral Filtering for Gray and Color Images. *Proc. IEEE International Conference on Computer Vision,* 1998
- **P. LIST ; A. JOCH ; J.LAINEMA ; G. BJONTEGAARD ; M. KARCZEWICZ.** Adaptive deblocking filter. *IEEE Trans. on Circuits and Systems for Video Technology (CSVT),* 2003